# EUROPÄISCHE PATENTANMELDUNG

(11) **EP 4 821 647 A1**
(43) Veröffentlichungstag der Anmeldung: **14.10.2026**
(21) Anmeldenummer: 26170819.2
(22) Anmeldetag: 07.04.2026
(51) Int. Cl.: B28B 1/26, B28B 1/00, B33Y 10/00, B33Y 70/00, C04B 33/28

(54) **NACHHALTIGES VERFAHREN ZUR HERSTELLUNG VON KERAMISCHEN GRÜNKÖRPERN**

(30) Priorität: 09.04.2025 DE 102025113983
(71) Anmelder: Deutsches Zentrum für Luft- und Raumfahrt e.V., 53227 Bonn (DE)
(72) Erfinder: Knoblauch, Nicole, 53229 Bonn (DE)
(74) Vertreter: dompatent

(57) **Zusammenfassung**

Die vorliegende Erfindung betrifft ein vereinfachtes Verfahren zur Herstellung eines keramischen Grünkörpers, basierend auf dem traditionellen Schlickerguss Verfahren, bei dem wie beim herkömmlichen Schlickerguss oder dem 3D Druck verbundene Verfahrensschritte wie Extrusion, Aushärtung über Temperaturwechsel oder UV-Licht und Entbinderung verzichtet werden kann. Das Schlickerguss Verfahren der Erfindung umfasst die folgenden Schritte:

I) Bereitstellen eines keramischen Schlickers,

II) Bereitstellen einer Vorlage,

III) Auftragen des keramischen Schlickers auf die Vorlage,

IV) Aushärten des Schlickers, bevorzugt durch aktive Trocknung,

V) Entnahme des Grünkörpers aus der Vorlage,

wobei die Vorlage ein wiederverwendbares Stärkebett enthält und insbesondere daraus besteht.

## Beschreibung

Die vorliegende Erfindung betrifft ein vereinfachtes Verfahren zur Herstellung eines keramischen Grünkörpers, basierend auf dem traditionellen Schlickerguss Verfahren, bei dem wie beim herkömmlichen Schlickerguss oder dem 3D Druck verbundene Verfahrensschritte wie Extrusion, Aushärtung über Temperaturwechsel oder UV-Licht und Entbinderung verzichtet werden kann.

Ein etabliertes Verfahren in der keramischen Fertigung ist der Schlickerguss, der vor allem zur Herstellung von Grünkörpern für keramische Produkte wie Porzellan verwendet wird. Bei diesem Verfahren wird ein wässriger Schlicker in poröse Gipsformen gegossen, wo er durch Wasserentzug aushärtet und sich die mineralischen Bestandteile ablagern, um einen festen Körper zu bilden (Rahaman, Mohamed N. Ceramic processing. John Wiley & Sons, Inc. 2006, ISBN 978-0-8493-7285-8). Neben dem klassischen Schlickerguss werden dreidimensionale keramische Bauteile auch über additive Fertigungsmethoden, wie der Stereolithographie gefertigt. In der Literatur sind bereits einige 3D Druck-verfahren für Keramik beschrieben, welche im Folgenden kurz erläutert werden.

Beim Pulverbett basierten 3D Druck wird eine keramische Pulveroberfläche, mittels eines Druckkopfes mit Bindertinte bedruckt, so dass die Pulverpartikel untereinander verkleben (Sachs, E.; Cima, M; Williams, P.; Brancazio, D.; Cornie, J. Three-dimensional printing: rapid tooling and prototypes directly from a CAD model, Journal of Engineering for Industry, 114 (4) (1992) pp. 481-488). Das Keramikpulver wird Schicht für Schicht aufgetragen und bedruckt. Das Bauteil wird hier von unten nach oben aufgebaut, wobei das übrige, nicht gebundene Pulver bei diesem Vorgang eine Stützfunktion übernimmt. Entscheidend sind hier die Korngrößenverteilung, die Kornform, die Dichte, sowie die spezifische Oberfläche der eingesetzten Pulver.

Das Fused Filament Fabrication (FFF) Verfahren stellt ein additives Fertigungsverfahren dar. Bei diesem wird ein aufgerolltes Filament, das üblicherweise aus einem thermoplastischen Polymer und Keramikpulver besteht, in Richtung einer Düse gefördert, aufgeschmolzen und per 3D-Druckverfahren verdruckt (Spina, R; Morfini, L. Material Extrusion Additive Manufacturing of Ceramics: A review on Filament-Based Process. Material 2024, 17, 2779. https::doi.org/10.3390/ma17112779). Anschließend ist ein Entbinderungsschritt, bei dem die organischen Anteile aus dem Bauteil entfernt werden notwendig, da es sonst beim Sintern zu unerwünschten Verformungen und Rissen im späteren Bauteil kommen kann.

Bei der kaltplastischen Extrusion wird eine keramische Paste (Keramikpulver, Lösungsmittel(n), Dispergiermittel und Plastifizierer) hier mit einem Schneckenextruder plastifiziert und zu einer Düse befördert, welche einen Strang produziert, selektiv auf einer Bauplattform ablegt und Schicht für Schicht zu einem Bauteil aufbaut. Im Vergleich zum FFF Verfahren ist hier der Additivgehalt vergleichsweise niedrig, so dass die Bauteile keinen gesonderten Entbinderungsschritt benötigen. Die Wandstärke ist bei diesem Verfahren allerdings auf 1 mm bis 10 mm beschränkt.

Bei der Methode der Fused Feedstock Deposition werden keramische Granulate (keramischer Spritzguss) in einem Schneckenextruder aufgeschmolzen und anschließend als Strang verdruckt. Die Wandstärke ist bei diesem Verfahren allerdings auf 1 mm bis 5 mm beschränkt.

Das Material Jetting stellt ein weiteres potentielles 3D Druck-Verfahren dar. In diesem Verfahren wird eine Tinte aus keramischen Partikeln und einem Binder über einen beheizbaren Druckkopf tropfenweise verdruckt (Lewis, J.A.; Smay, J.E.; Stuecker, J.; Cesarano, J.; Direct ink writing of three-dimensional ceramic structures, Journal of the American Ceramic Society, 89 (12) (2006), pp 3599-3609). Nach dem Auftragen auf die Druckplatte verdunstet das Lösemittel der Tinte, sodass nur die eigentliche Keramik mit Binder auf der Druckfläche verbleibt. Das Entbindern erfolgt in der Regel in einem Schritt mit dem Sintern des Bauteils.

Das Direct ink writing ist ein ähnliches Verfahren wie das Material Jetting. Hier werden jedoch Tinten mit höherer Viskosität verarbeitet, wodurch ein Strang-Druck ermöglicht wird (Lewis, J.A.; Smay, J.E.; Stuecker, J.; Cesarano, J.; Direct ink writing of three-dimensional ceramic structures, Journal of the American Ceramic Society, 89 (12) (2006), pp 3599-3609).

Die Vat Photo Polymerization (VPP) stellt ein weiteres 3D Druckverfahren für keramische Grünkörper dar. Bei diesem Verfahren wird ein UV-reaktives System bestehend aus einem Reaktionsharz (Oligomer/Monomer-Gemisch) und einem Photoinitiator und Keramikpartikeln mit UV-Licht ortsselektiv ausgehärtet (Griffith, M.L.; Halloran, J.W. Ultraviolet curable ceramic suspensions for stereolithography, Journal of the American Ceramic Society, 79 (10) (1996), pp. 2601-2608). Mit diesem Verfahren sind komplexe Geometrien möglich, jedoch kann die Aushärtezeit mehrere Stunden in Anspruch nehmen.

Das digital light processing Verfahren funktioniert ähnlich wie das VPP-Verfahren, jedoch mit dem Unterschied, dass ein gesamtes Schichtbild auf einmal projiziert wird, was zu schnelleren Druckzeiten führt.

Eine weitere bekannte Methode ist die Zwei-Photonen-Lithographie (two-photon polymerization). Bei der Herstellung von Strukturen in der Zwei-Photonen-Lithographie werden ebenfalls Photopolymere verwendet. Der Unterschied liegt hierbei in der Interaktion mit den anregenden Photonen. Bei dieser Interaktion findet eine Absorption der Photonen an der Oberfläche statt und das Reaktionsharz wird an der Oberfläche ausgehärtet. Mit diesem Verfahren können dreidimensionale Teile in Nano-Präzision hergestellt werden (Wu, E.-S.; Strickler, J.H; Harrel, W.R.; Webb, W.W. Two-photon lithography for microelectronic application, Optical/Laser Microlithography V, International Society for Optics and Photonics (1992), pp. 776-783).

Bei dem 3D Siebdruckverfahren wird eine Paste bestehend aus Keramikpartikeln und Additiven auf einem Sieb mit entsprechendem Muster platziert und mittels eines Rakels durch die Aussparungen gedrückt. Durch Absenkung der Druckplatte können Schichten aufgebaut werden.

Ein neueres Verfahren ist der Laser-induzierte Schlickerguss (LIS), welcher einen Aufbau von komplexen Bauteilen unter Verwendung von konventionellem Schlicker mit einem geringen Organikanteil, die den aufwendigen Entbinderungschritt überflüssig machen, ermöglicht. Bei diesem Verfahren werden jedoch immer noch eigens angefertigte Opferformen benötigt, welche nicht recycelt werden können.

Ein weiteres neuartiges Verfahren ist das Freeform Injection Moulding (FIM), ein hybrider Fertigungsansatz, bei dem 3D-gedruckte polymere Opferformen für Ceramic Injection Moulding (CIM) verwendet werden. Diese Technik bietet großartige additive Fertigungsmöglichkeiten mit Formkomplexizität und Materialvielfalt, jedoch ist hier auch ein aufwendiger Herauslösung- und Entbinderungsprozess notwendig.

Alle bisherigen additiven Fertigungsmethoden haben den gemeinsamen Nachteil, dass sie sehr zeitaufwendig sind. Dies ist vor allem den verwendeten Suspensionen mit einem hohen Anteil an organischen Additiven geschuldet. Der dadurch benötigte zeitaufwendige Entbinderungsschritt hat zur Folge, dass nur dünnwandige Bauteile ökonomisch produziert werden können. Beim traditionellen Schlickerguss oder ähnlichen Verfahren werden Gips- oder Polymerformen eingesetzt. Durch diese Formen sind auch dickwandigere Geometrien möglich, jedoch sind diese in ihrer Form festgelegt und man benötigt für jede Geometrie und jedes Bauteil eine eigene bzw. neue speziell angefertigte Form. Darüber hinaus besteht bei Gips und Polymerformen die Schwierigkeit der Ausformung von Gusserzeugnissen mit komplizierter Form, wie z.B. Gitterstrukturen oder Strukturen mit entgegengesetzter Neigung zur Ausformrichtung.

Der vorliegenden Erfindung liegt daher die Aufgabe zugrunde ein Schlickergussverfahren bereitzustellen, welches die Nachteile der bisherigen Verfahren eliminiert oder zumindest reduziert, und bei dem auf aufwendige Verfahrensschritte wie Extrusion, Aushärtung über Temperaturwechsel oder UV-Licht und Entbinderung verzichtet werden kann. Zudem wäre die Möglichkeit, eine Form wiederverwenden zu können, wünschenswert.

Überraschenderweise hat sich gezeigt, dass eine Vorlage mit Stärke für das Schlickergussverfahren aufgrund der Wasseraufnahmefähigkeit und Undurchlässigkeit von Keramikpartikeln geeignet ist. Zusätzlich kann bei Verwendung einer Stärkevorlage der Anteil an organischen Additiven in der Herstellung des Schlickers abhängig vom Material des Schlickers eliminiert oder so weit reduziert werden, dass ein Entbinderungsschritt nicht mehr nötig ist. Außerdem kann das Stärkebett einfach entfernt und recycelt und für jede neue Anwendung beispielsweise zu einer passenden Opferform geformt werden.

In einer ersten Ausführungsform der vorliegenden Erfindung wird daher ein Schlickerguss Verfahren zur Herstellung eines keramischen Grünkörpers bereitgestellt, welches die folgenden Schritte umfasst:
I) Bereitstellen eines keramischen Schlickers,
II) Bereitstellen einer Vorlage,
III) Auftragen des keramischen Schlickers auf die Vorlage,
IV) Aushärten des Schlickers, bevorzugt durch aktive Trocknung,
V) Entnahme des Grünkörpers aus der Vorlage,
dadurch gekennzeichnet, dass die Vorlage ein wiederverwendbares Stärkebett enthält und insbesondere daraus besteht.

Der keramische Schlicker enthält mindestens ein (Glas-)Keramikpulver, wie beispielsweise Zirkoniumoxid, Ceroxid, Aluminiumoxid, Yttriumoxide, sowie andere dem Fachmann bekannte Verbindungen, und ein Dispergiermedium z.B. ein Polyelektrolyt auf einer Karbonsäurebasis wie Dolapix CE 64.

Besonders bevorzugt enthält die Vorlage ein wiederverwendbares Stärkebett und besteht insbesondere daraus. Im Vergleich zu porösen Gipsformen oder polymeren Gussformen, ist Stärke nachhaltig, wesentlich günstiger, einfacher zu erhalten, zu lagern und zu verarbeiten. Dadurch können die Produktionskosten gesenkt werden.

Die Vorlage kann das Stärkebett enthalten oder vollständig daraus bestehen, wodurch eine besonders flexible Gestaltung und Ausführung der Vorlagen ermöglicht wird. Durch diese Ausgestaltung kann dieselbe Vorlage in unterschiedlichen Geräten, Verfahren oder Produktionsschritten verwendet werden, wodurch der Herstellungsprozess vielseitiger und effizienter gestaltet werden kann. Zudem erlaubt ein modularer Aufbau von Vorlage und Stärkebett eine einfache Anpassung an unterschiedliche Geometrien, Schlickermengen oder Anforderungen an die Formgebung, ohne dass separate Vorlagen für jeden Einsatzfall notwendig sind. Diese Variabilität reduziert den Materialaufwand, vereinfacht die Handhabung und erhöht die Wirtschaftlichkeit des Verfahrens, während gleichzeitig die Wiederverwendbarkeit und Austauschbarkeit von Vorlage und Stärkebett gefördert wird.

Ebenso bevorzugt enthält das Stärkebett Stärke, welche ausgewählt ist aus Kartoffelstärke, Weizenstärke, Reisstärke, Maisstärke, Rosskastanienstärke, Maniokstärke, chemisch modifizierter Stärke und/oder eine Mischung aus einer oder mehreren dieser Stärken. Vorzugsweise enthält das Stärkebett eine oder zwei oder drei, insbesondere eine oder zwei dieser Stärken.

Unter chemisch modifizierter Stärke versteht man Stärke, welche durch physikalische, enzymatische oder chemische Verfahren gewonnen wurde. Modifikationen der Stärke umfassen unter anderem aber nicht ausschließlich Säurebehandlung, alkalische Modifikation, Bleichen durch Peroxidverbindungen, enzymatische Veränderung durch beispielsweise Amylasen, Oxidation der Stärke, Phosphatierung, Acetylierung, Hydroxypropylierung und weitere dem Fachmann bekannte Methoden der Modifikation von Stärke. Dabei können erfindungsgemäß alle zuvor genannten Stärkearten modifiziert werden.

Unter physikalischer Modifikation versteht man beispielsweise die thermische Behandlung von Stärke.

Modifizierte Stärke besitzt gegenüber der unbehandelten Stärke je nach Art und Weise der Modifikation(en) eine verbesserte Wasserabsorptionsfähigkeit, Hitzestabilität, Säurestabilität, Scherstabilität, Streufähigkeit, Fließfähigkeit sowie andere dem Fachmann auf dem Gebiet der Technik bekannte verbesserte Eigenschaften.

Besonders bevorzugt wird das Stärkebett mithilfe eines Presslings vorgeformt, um eine Opferform zu formen. Durch die Möglichkeit das Stärkebett vor jedem Guss neu zu formen weist das erfindungsgemäße Verfahren eine große Variabilität der möglichen Gussformen auf. Das Stärkebett kann außerdem nach jedem Gussverfahren recycelt werden, wodurch dieses Verfahren eine verbesserte Ökonomie der Rohstoffe aufweist.

Ebenso bevorzugt dient das Stärkebett als Unterlage für das Aufbringen eines Schlickers. Durch die Verwendung des Stärkebettes als Unterlage wird es ermöglicht mit dem erfindungsgemäßen Verfahren einen Grünkörper mithilfe eines 3D-Druckverfahren durch stufenweises Auftragen der einzelnen Schichten auf das Stärkebett zu erhalten. Das erfindungsgemäße Stärkebett ermöglicht überraschenderweise eine schnellere Trocknung, weswegen ein rascherer Druck und damit die ökonomischere Herstellung eines Grünkörpers möglich ist.

Das Stärkebett kann als Vorlage in zwei funktional unterschiedlichen Ausgestaltungen bereitgestellt sein. In einer ersten Ausgestaltung ist das Stärkebett als formgebende Vorlage ausgebildet. Hierbei weist das Stärkebett zumindest eine vorgeformte Negativkontur auf, die die Geometrie des herzustellenden Grünkörpers zumindest abschnittsweise definiert. Die Negativkontur kann beispielsweise durch eine generelle Formgebung des Stärkebettes oder durch Einbringen eines Presslings als Opferform erzeugt werden. Der eingebrachte Schlicker nimmt dabei die durch das Stärkebett vorgegebene Form unmittelbar an.

Hiervon funktional zu unterscheiden ist eine zweite Ausgestaltung, bei der das Stärkebett als stützende Unterlage beziehungsweise als nicht formgebende Unterlage dient. In diesem Fall weist das Stärkebett keine die Endgeometrie definierende Negativkontur auf. Die Geometrie des Grünkörpers wird vielmehr durch den gezielten Auftrag des Schlickers, insbesondere im Rahmen eines 3D-Gussverfahrens, erzeugt, wobei das Stärkebett lediglich der Aufnahme, Stabilisierung und Entwässerung des aufgetragenen Materials dient.

Weiterhin bevorzugt wird die Stärke, aus welcher das Stärkebett besteht, so ausgewählt, dass der Anteil an Amylose und Amylopektin des Stärkebettes der gewünschten Verwendung entsprechend angepasst ist.

Amylopektin ist der Hauptbestandteil der natürlichen pflanzlichen Stärken wie zum Beispiel der Kartoffel-, Weizen- oder Maisstärke. Amylopektin besteht aus D-Glucose-Monomeren welche o-1,4-glycosidisch miteinander verbunden sind. Etwa alle 15-30 Monomere ist eine Seitenkette o-1,6-glycosidisch verknüpft, wodurch eine baumartige Verzweigung entsteht. Diese Seitenketten können kurz (mit 12 bis 20 Glucoseeinheiten), lang (30-45 Einheiten) und sehr lang mit durchschnittlich 60 Glucoseeinheiten sein. Aufgrund dieser Struktur bildet Amylopektin auf molekularer Ebene Knäuel- bzw. verzweigte Strukturen aus. Aufgrund der Größe, Verzweigungen, der damit verbundenen dreidimensionalen Struktur und einer molaren Masse zwischen 10.000.000 und 200.000.000 g/mol, sowie der großen Anzahl an Wasserstoffbrückenbindungen innerhalb des Moleküls weist das Amylopektin hydrophobe Eigenschaften auf.

Amylose ist der zweite große Bestandteil von Stärke und besteht aus linearen α-1,4-glycosidisch verbundenen D-Glucose-Monomeren, welche zu langen schraubenförmigen Helices gewunden sind. Im Gegensatz zum Amylopektin ist die Amylose sehr gut wasserlöslich aufgrund des linearen Aufbaus mit vielen exponierten Hydroxygruppen auf der Oberfläche. Dadurch weist Amylose eine deutlich vergrößerte hydrophile Oberfläche auf als Amylopektin, wodurch die deutlich erhöhte Wasserlöslichkeit erklärt wird.

Besonders bevorzugt ist das Stärkebett so aufgebaut, dass der Amylopektingehalt des Stärkebettes höher ist als der Amyloseanteil. Durch einen erhöhten Amylopektingehalt im Stärkebett wird die Hydrophobizität des Stärkebettes erhöht, was zu einem veränderten Kontaktwinkel und anderen Fließfähigkeit des aufgetragenen Schlickers in eine Opferform führt.

Ebenso bevorzugt ist das Stärkebett so aufgebaut, dass der Amylosanteil des Stärkebettes höher ist als der Amylopektinanteil. Durch einen erhöhten Amyloseanteil im Stärkebett kann mehr Wasser aus dem Schlicker beim Auftragen gebunden werden, was zu einer deutlich verkürzten Trocknungszeit beim 3D-Druckverfahren und Schlickergussverfahren führt.

Weiterhin bevorzugt verbessert das Stärkebett die Scherbenbildung des Grünkörpers. Dies ist vermutlich darauf zurückzuführen, dass das Stärkebett die Fähigkeit besitzt, aufgrund ihrer molekularen Beschaffenheit dem Schlicker Lösemittel, wie zum Beispiel Wasser, zu entziehen. Durch die ausgeprägte Wasseraufnahme- und Quellfähigkeit der Stärke wird dem Schlicker das Lösemittel gleichmäßig und kontrolliert entzogen, wodurch der Feststoffgehalt lokal ansteigt, und eine rasche Partikelvernetzung einsetzt. Hierdurch wird eine gleichmäßigere Gefügeausbildung begünstigt und die Ausbildung von Trocknungsspannungen reduziert. Dies führt insgesamt zu einer verbesserten Formstabilität des Grünkörpers sowie zu einem rissärmeren und homogeneren Scherben.

Ebenso bevorzugt härtet das Stärkebett den Schlicker durch Entzug des Wassers aus dem Schlicker aus. Durch die Verwendung eines Stärkebettes mit wasserabsorbierenden Eigenschaften kann die Trocknungszeit dadurch erheblich verkürzt werden, was zu einer noch weiter verkürzten Trocknungszeit und damit Produktionszeit der Grünkörper führt, da der Trocknungsschritt beim herkömmlichen Schlickergussverfahren einen der zeitaufwendigsten Schritte darstellt.

Die vorteilhafte Wirkung des Stärkebettes beruht dabei insbesondere auf der ausgeprägten Wasseraufnahmefähigkeit von Stärke. Stärkegranulate sind in der Lage, erhebliche Mengen an Wasser physikalisch zu binden und in ihrer Struktur einzulagern. Durch diesen kapillaren und sorptiven Wasserentzug aus dem Schlicker wird lokal eine schnelle Erhöhung des Feststoffgehalts bewirkt, wodurch eine rasche Verfestigung beziehungsweise Aushärtung des Schlickers einsetzt. Die Stärke wirkt somit nicht lediglich als formgebendes oder stützendes Medium, sondern übernimmt gleichzeitig die Funktion eines aktiven Trocknungshilfsmittels. Dadurch kann eine gleichmäßigere Durchtrocknung des entstehenden Grünkörpers erreicht und das Risiko von Rissbildung oder Inhomogenitäten reduziert werden.

Besonders bevorzugt weist die Stärke des Stärkebettes einen Wasserphasen-Kontaktwinkel von weniger als 16°, insbesondere kleiner als 13°, insbesondere bevorzugt 10° oder weniger auf.

Der Wasserphasen-Kontaktwinkel wird mittels des sogenannten Sessile-Drop-Verfahrens bestimmt. Hierzu wird ein Tropfen deionisierten Wassers mit einem Volumen von 1 bis 5 µL unter Verwendung einer Dosierspritze auf die horizontal ausgerichtete und gereinigte Oberfläche der Probe aufgebracht. Die Messung erfolgt bei einer Temperatur von 23 °C ± 2 °C und einer relativen Luftfeuchte von 50 % ± 10 %. Der Tropfen wird seitlich mittels eines optischen Kontaktwinkelmessgeräts erfasst, und der Kontaktwinkel wird 5 Sekunden nach dem Aufbringen des Tropfens bestimmt. Die Auswertung der Tropfenkontur erfolgt durch Anpassung an die Young-Laplace-Gleichung. Der angegebene Kontaktwinkel entspricht dem Mittelwert aus mindestens drei Messungen an unterschiedlichen Stellen der Oberfläche.

Bei der Verwendung eines Stärkebettes als formgebende oder stützende Vorlage kann auf die Zugabe organischer Bindemittel oder Trocknungshilfsmittel im Schlicker weitgehend verzichtet werden. Üblicherweise werden in keramischen oder mineralischen Schlickern organische Verbindungen wie Cellulose, Polyvinylalkohol, Stärkeester oder lösliche Polymere eingesetzt, um die Konsistenz zu verbessern, die Verarbeitbarkeit zu erleichtern und die Trocknung zu beschleunigen. Aufgrund der ausgeprägten Wasseraufnahme- und Quellfähigkeit der Stärke im Stärkebett erfolgt jedoch ein kontrollierter Entzug des Lösemittels aus dem Schlicker. Dieser Entzug erhöht lokal den Feststoffgehalt und fördert eine schnelle Partikelvernetzung, wodurch die mechanische Stabilität des Grünlings bereits während der Aushärtung sichergestellt wird. Infolgedessen entfallen viele der Funktionen, die sonst durch organische Zusätze erfüllt werden müssten, wie beispielsweise die Verbesserung der Formstabilität während der Trocknung, die Verringerung von Schrumpfungsspannungen oder die Beschleunigung des Trocknungsprozesses. Durch diesen Effekt kann der Schlicker ohne zusätzliche organische Bindemittel eingesetzt werden, was insbesondere Materialkosten senkt, die Homogenität des Grünkörpers verbessert und das Risiko von Verbrennungsrückständen beim späteren Brennvorgang reduziert.

Besonders bevorzugt enthält der keramische Schlicker einen geringen Anteil organischer Verbindungen und/oder keine organischen Verbindungen.

Weiterhin bevorzugt ist das Verfahren dadurch gekennzeichnet, dass zum Erhalt des fertigen Grünkörpers in Schritt V) keine aufwendigen Herauslösungs- und/oder Entbinderungsprozesse nötig sind. Da bei Durchführung des erfindungsgemäßen Verfahrens der Anteil organischer Verbindungen reduziert, beziehungsweise eliminiert wird, kann auf einen Entbinderungsprozess verzichtet werden. Zusätzlich ist kein aufwendiger Herauslösungsprozess nötig, da der Schlicker in eine Opferform gegossen wurde, welche in ein Stärkebett gepresst wurde, wodurch der fertige Grünkörper einfach entnommen werden kann. Die restliche Stärke, welche noch potenziell am Grünkörper verbleibt, kann entweder mit Hilfe eines Pinsels entfernt werden oder wird durch das nachfolgende Sintern des Grünkörpers entfernt.

Damit entfällt bei einem erfindungsgemäßen Verfahren der wohl aufwendigste Schritt der bisherigen Produktion von keramischen Grünkörpern, wodurch das erfindungsgemäße Verfahren eine deutlich verkürzte Produktionszeit aufweist.

### Ausführungsbeispiele

Im nachfolgenden werden exemplarische Ausführungsformen der vorliegenden Erfindung dargestellt. Diese stellen jedoch keine erschöpfende Aufzählung der Ausführungsformen der vorliegenden Erfindungen dar.

### Beispiel 1)

In einem ersten erfindungsgemäßen Ausführungsbeispiel wurde ein Grünkörper mittels eines Additiven Verfahrens hergestellt. Dafür wurde ein keramischer Schlicker mit der Zusammensetzung 10 g CeO₂, 2 g YSZ, 4 g Wasser und 0,18g Dolapix CE64 in einem Resonanzmixer gemischt und der Grünkörper wurde dann mittels einer Quetschflasche schichtweise per Hand auf ein Weizenstärkebett gedruckt.

Im Gegensatz zu den oben genannten 3D Druck-Methoden konnte hier eine sofortige Aushärtung des Materials durch direkte Trocknung beobachtet werden. So waren hier keine Polymere zur Stabilisation des Grünkörpers notwendig. Ein gleichwertiger Druck wäre natürlich auch auf Gips möglich jedoch würde hier der anschließende Transfer des Grünkörpers auf die Sinterplatte zum Brennen durch das Anhaften des Grünkörpers an den Gips erschwert. Beim Stärkebett ist der Transfer des Grünkörpers problemlos möglich und anhaftende Rückstände stellen kein Problem dar, da sie beim späteren Sintern verbrennen würden.

Die sofortige Aushärtung des Materials durch direkte Trocknung des Schlickers durch ein Stärkebett lässt sich vermutlich mit der erhöhten Wasseraufnahmekapazität des Stärkebettes im Vergleich zu Gips erklären. Der Hydrophiliegrad und damit verbunden die Absorptionsfähigkeit der Opferform lässt sich durch Vergleich des Wasser-Phasen Kontaktwinkels bewerten.

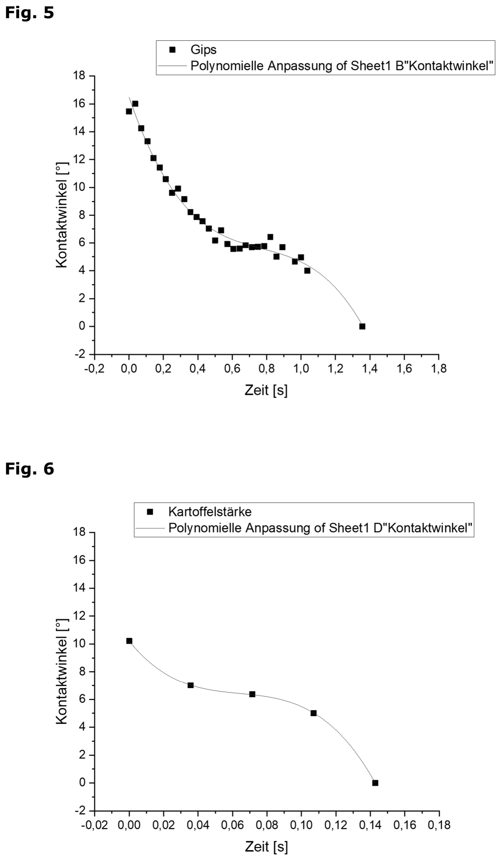

Ein kleiner Wasserphasen-Kontaktwinkel zeigt an, dass die Stärke eine hohe Wasseraufnahmekapazität hat. In Anlehnung an die Methode von Zhu et al. (2022) erfolgte die Bestimmungsmethode wie folgend beschrieben:
Zunächst wird eine angemessene Menge der Stärkeprobe entnommen und auf einen Objektträger in Form gepresst, um eine glatte Oberfläche zu erhalten. Dann wird die Probe auf dem Objekttisch des Mikroskops so platziert, dass mit Hilfe einer Kamera der Kontaktwinkel des später vertropften Wassers erfasst werden kann. Mit dem aufgezeichneten Video kann anschließend die Form der Wassertröpfchen während des Benetzungsvorgangs analysiert werden. So werden die Kontaktwinkel zwischen Wasser und Probenoberfläche gemessen. Die Figuren 5 und 6 zeigen die gemessenen Kontaktwinkel während der Absorption. Der erste gemessene Kontaktwinkel gibt Aufschluss über die Hydrophilie der Oberfläche. Der ermittelte Kontaktwinkel von Kartoffelstärke beträgt 10° und ist damit kleiner als der ermittelte Kontaktwinkel von Gips mit 16°. Die höchste Hydrophilie und Wasseraufnahmefähigkeit zeigt somit die Kartoffelstärke. Die Abnahme des Kontaktwinkels über die Zeit zeigt wie schnell das Wasser vom Substrat aufgenommen werden kann. Kartoffelstärke kann einen Wassertropfen 10-mal schneller als Gips absorbieren.

Figur 5 zeigt den Wasserkontaktwinkel auf einer Gipsoberfläche aufgetragen über die Zeit in schwarz und in Rot die polynominelle FitKurve der experimentellen Daten.

Figur 6 zeigt den Wasserkontaktwinkel auf einer Kartoffelstärkeoberfläche aufgetragen über die Zeit in schwarz und in Rot die polynominelle FitKurve der experimentellen Daten.

Erfindungsgemäß ist somit der Kontaktwinkel des eingesetzten Stärkebettes kleiner als 16°, insbesondere kleiner als 13°, insbesondere bevorzugt 10° oder weniger.

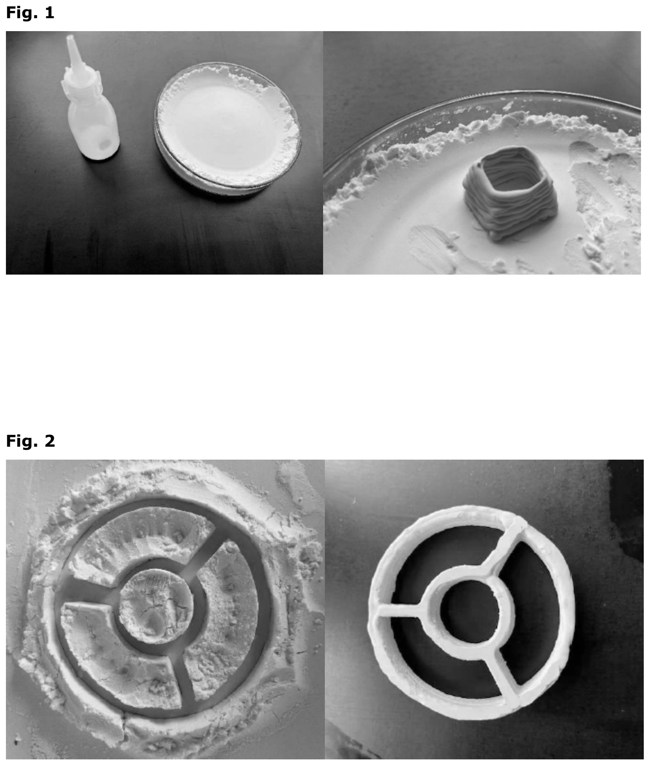

In Figur 1 ist das erfindungsgemäße erste Beispiel gezeigt: Fig. 1 (Links): Darstellung der verwendeten Quetschflasche gefüllt mit Schlicker und ein Stärkebett. Fig. 1(Rechts): Ein handgedruckter Grünkörper auf einem Stärkebett.

### Beispiel 2)

In einem zweiten erfindungsgemäßen Ausführungsbeispiel wurde eine Keramik mittels eines Spritzgussverfahrens erhalten. Dafür wurde ein Schlicker mit der Zusammensetzung 60 g CeO₂, 8 g YSZ, 24 g Wasser und 1 g Dolapix CE64 hergestellt. Das Stärkebett wurde dann mit einer Pressform aus Kunststoff in Form gedrückt, um eine Opferform zu erschaffen. In diese Weizenstärkeform wurde anschließend der im Resonanzmixer gemischte Schlicker gegossen und für 24 h getrocknet. Nach dem Trocknen konnte die Stärke mittels Pinsel entfernt und der erhaltene Grünkörper im Ofen bei 1650 °C (1 °C/min; 2 h) gesintert werden.

Ein aufwendiger Entbinderungsschritt war nicht notwendig und die Stärke konnte für eine neue Pressform wiederverwendet werden.

In Figur 2 ist das erfindungsgemäße zweite Beispiel gezeigt. Dabei zeigen Fig. 2 (Links): Darstellung eines Stärkebetts, welches mittels eines Presslings in eine Opferform gebracht wurde, sowie mit Schlicker befüllt wurde. Fig. 2 (Rechts): Die gebrannte Keramik, welche nach Entnahme des getrockneten Schlickers aus der Opferform und Sintern erhalten wurde.

### Beispiel 3)

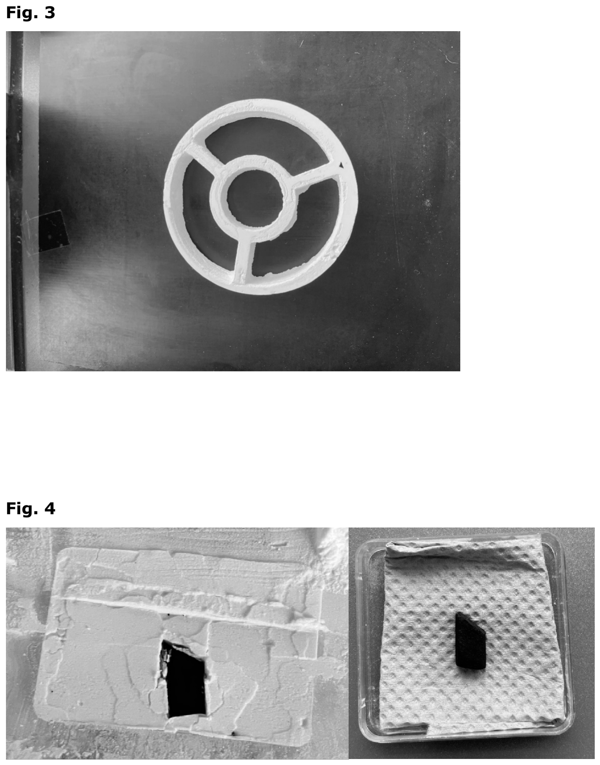

In Figur 3 ist ein erfindungsgemäßes drittes Beispiel gezeigt. In diesem erfindungsgemäßen Ausführungsbeispiel wurde eine Keramik mittels eines Spritzgussverfahrens erhalten. Dafür wurde ein Schlicker mit der Zusammensetzung 60 g Al₂O₃, 15 g Wasser und 1,2 g Dolapix CE64 durch Mischen in einem Resonanzmixer hergestellt. Das Stärkebett wurde dann mit einer Pressform aus Kunststoff in Form gedrückt, um eine Opferform zu erschaffen. In diese Stärkeform wurde anschließend der im Resonanzmixer gemischte Schlicker gegossen und für 24 h getrocknet. Nach dem Trocknen konnte die Stärke mittels Pinsel entfernt und der erhaltene Grünkörper im Ofen bei 1400 °C (1 °C/min; 2 h) gesintert werden.

Ein aufwendiger Entbinderungsschritt war nicht notwendig und die Stärke konnte für eine neue Pressform wiederverwendet werden.

### Beispiel 4)

In Figur 4 ist ein erfindungsgemäßes viertes Beispiel gezeigt. In diesem erfindungsgemäßen Ausführungsbeispiel wurde eine Keramik mittels eines Spritzgussverfahrens erhalten. Dafür wurde ein Schlicker mit der Zusammensetzung 3 g SrFeO₃, 1,3 g Wasser und 0,1 g Dolapix CE64 durch Mischen in einem Resonanzmixer hergestellt. Das Stärkebett wurde dann mit einer Pressform aus Kunststoff in Form gedrückt, um eine Opferform zu erschaffen. In diese Stärkeform wurde anschließend der im Resonanzmixer gemischte Schlicker gegossen und für 24 h getrocknet. Nach dem Trocknen konnte die Stärke mittels Pinsel entfernt und der erhaltene Grünkörper im Ofen bei 1200 °C (5 °C/min; 2 h) gesintert werden.

Ein aufwendiger Entbinderungsschritt war nicht notwendig und die Stärke konnte für eine neue Pressform wiederverwendet werden.

## Patentansprüche

1. Schlickerguss Verfahren zur Herstellung eines keramischen Grünkörpers umfassend die folgenden Schritte:
I) Bereitstellen eines keramischen Schlickers,
II) Bereitstellen einer Vorlage,
III) Auftragen des keramischen Schlickers auf die Vorlage,
IV) Aushärten des Schlickers, bevorzugt durch aktive Trocknung,
V) Entnahme des Grünkörpers aus der Vorlage,
**dadurch gekennzeichnet, dass**
die Vorlage ein wiederverwendbares Stärkebett enthält und insbesondere daraus besteht.

2. Verfahren nach Anspruch 1, bei dem das Stärkebett Stärke enthält, welche ausgewählt ist aus Kartoffelstärke, Weizenstärke, Reisstärke, Maisstärke, Rosskastanienstärke, Maniokstärke, chemisch modifizierte Stärke und/oder eine Mischung aus einer oder mehreren dieser Stärken.

3. Verfahren nach Anspruch 1 oder 2, bei dem das Stärkebett mithilfe eines Presslings vorgeformt wird, oder durch 3D-Druckverfahren in eine Schlickergussform überführt wird, um eine Opferform zu formen.

4. Verfahren nach Anspruch 1 oder 2, bei dem das Stärkebett als Unterlage für das Aufbringen eines Schlickers dient.

5. Verfahren nach mindestens einem der Ansprüche 1 bis 4, bei dem das Stärkebett so aufgebaut ist, dass der Amylopektingehalt des Stärkebetts höher ist als der Amyloseanteil.

6. Verfahren nach mindestens einem der Ansprüche 1 bis 4, bei dem das Stärkebett so aufgebaut ist, dass der Amylosegehalt des Stärkebetts höher ist als der Amylopektingehalt.

7. Verfahren nach mindestens einem der Ansprüche 1 bis 6, bei dem das Stärkebett die Scherbenbildung des Grünkörpers verbessert.

8. Verfahren nach mindestens einem der Ansprüche 1 bis 7, bei dem der keramische Schlicker einen geringen Anteil organischer Verbindungen und/oder keine organischen Verbindungen enthält.

9. Verfahren nach mindestens einem der Ansprüche 1 bis 8, bei dem die Stärke des Stärkebettes einen Wasserphasen-Kontaktwinkel von weniger als 16°, insbesondere kleiner als 13°, insbesondere bevorzugt 10° oder weniger aufweist gemessen nach dem Sessile-Drop-Verfahren.

10. Verfahren nach mindestens einem der Ansprüche 1 bis 9, **dadurch gekennzeichnet, dass** zum Erhalt des fertigen Grünkörpers in Schritt V) keine aufwendigen Herauslösungs- und/oder Entbinderungsprozesse nötig sind.
